# EUROPÄISCHE PATENTSCHRIFT

(11) **EP 1 741 275 B1**
(45) Veröffentlichungstag und Bekanntmachung des Hinweises auf die Patenterteilung: **15.01.2014**
(21) Anmeldenummer: 05716982.3
(22) Anmeldetag: 10.03.2005
(51) Int. Cl.: H04M 3/42

(54) **VERFAHREN UND EINHEIT ZUM ERMITTELN NUTZBARER DIENSTE**
METHOD AND UNIT USED TO DETERMINE USEABLE SERVICES
PROCEDE ET UNITE POUR DETERMINER DES SERVICES UTILISABLES

(30) Priorität: 30.04.2004 DE 102004021321
(43) Veröffentlichungstag der Anmeldung: 10.01.2007
(73) Patentinhaber: Unify GmbH & Co. KG, 81379 München (DE)
(72) Erfinder: BOZIONEK, Bruno, 33178 Borchen (DE); HEMKEMEYER, Dieter, 59302 Ölde (DE); KLAGHOFER, Karl, 81373 München (DE); NEUHAUS, Ralf, 44534 Lünen (DE); TIETSCH, Michael, 86916 Kaufering (DE); UECKER, Rainer, 45470 Mülheim (DE); ZIMMERMANN, Rainer, 33106 Paderborn (DE)
(74) Vertreter: Fritzsche, Thomas
(86) Internationale Anmeldenummer: PCT/EP2005/051071
(87) Internationale Veröffentlichungsnummer: WO 2005/107229

(56) Entgegenhaltungen:
- WO-A-01/65821
- US-A- 5 812 865
- US-A1- 2002 174 199

## Beschreibung

Die Erfindung betrifft ein Verfahren zum Ermitteln nutzbarer Dienste, bei dem Ortsdaten für mehrere Geräte gespeichert werden, wobei ein Ortsdatum jeweils eine Angabe über den Aufstellungsort des betreffenden Gerätes enthält, sowie eine Einheit zur Ermittlung nutzbarer Daten mit einer Ortsermittlungseinheit.

Beispielsweise sind die Geräte an eine privat genutzte Telekommunikationsanlage angeschlossene Telefone. Für Servicezwecke werden beim Anmelden der Telefone an der Telekommunikationsanlage auch Gebäude- und Raumnummern vermerkt, die es Servicemitarbeitern erleichtern, Rufnummern und Räume einander zuzuordnen.

Jedoch können auch für andere Geräte Ortsangaben gespeichert werden, beispielsweise in einem lokalen Datenübertragungsnetz, der Ort von Datenverarbeitungsanlagen, von Druckern, von Scannern oder von anderen Geräten.

Aus der Patentschrift US 5,812,865 A ist bekannt, einen so genannten Location Service zum Ermitteln von Positionen eines Benutzers und von Geräten im Umfeld eines Benutzers einzusetzen. Dabei ist vorgesehen personenspezifische Informationen zu sammeln oder eine Liste von in der Umgebung befindlichen Geräten zu speichern. Daraus berechnete Folgerungen werden an laufende Anwendungen des Benutzers und an Geräte, mit denen der Benutzer interagiert, verbreitet.

Darüber hinaus ist aus der Veröffentlichung WO 01/65821 A2 eine umgebungs-gestützte ("proximity-based") Registrierung von Diensten bei einem Telefonsystem bekannt. Hierbei geht es im Wesentlichen darum, von Geräten erbrachte Dienste, die einem Benutzer später zur Verfügung stehen sollen, beim Telefonsystem bekannt zu machen.

Es ist Aufgabe der Erfindung, ein einfaches Verfahren anzugeben, bei dem aufgrund von Ortsdaten neue Anwendungen erschlossen werden, insbesondere ein verbessertes Ermitteln von für einen Nutzer nutzbaren Diensten. Außerdem soll eine Einheit zum Ermitteln nutzbarer Dienste angegeben werden.

Die auf das Verfahren bezogene Aufgabe wird durch die im Patentanspruch 1 angegebenen Verfahrensschritte sowie durch die in Patentanspruch 9 angegebene Einheit gelöst. Weiterbildungen sind in den Unteransprüchen angegeben.

Die Erfindung geht von der Überlegung aus, dass Ortsdaten von Geraten genutzt werden können, um einem Nutzer automatisch die Nutzung von Diensten anzubieten, die durch diese Geräte erbracht werden, wenn der Aufenthaltsort des Nutzers bekannt ist. Deshalb werden bei dem erfindungsgemäßen Verfahren zusätzlich zu dem eingangs genannten Verfahrensschritt die folgenden Verfahrensschritte ausgeführt:
- Erzeugen eines Ortsdatums, das den Aufenthaltsort eines Nutzers angibt,
- abhängig von dem ermittelten Ortsdatum und den gespeicherten Ortsdaten automatisches Auswählen mindestens eines Gerätes, das von dem Nutzer genutzt werden kann und darf,
- Übertragen einer Statusmeldung zu einem Gerät oder zu einem von dem Nutzer genutzten Bezugsgerät, wobei mit der Statusmeldung dem Nutzer die Dienstnutzung mindestens eines Dienstes angeboten wird, der durch ein Gerät oder durch ein aus mehreren Geräten zusammengesetztes Gerät erbracht wird.

Durch diese Maßnahmen muss sich der Nutzer nicht selbst darum kümmern, welche Geräte in seiner Umgebung angeordnet sind und welche Geräte gegebenenfalls für ihn freigeschaltet sind. Weiterhin kann der Nutzer entlastet werden, wenn Treiber- oder Protokollumsetzungen erforderlich sind, da diese vorsorglich oder bei einer Auswahl des betreffenden Dienstes durch den Nutzer automatisch beschafft werden. Auch muss der Nutzer seine Umgebung nicht absuchen, um einen Überblick über die nutzbaren Geräte zu erhalten. Ein Übersehen von Geräten, beispielsweise in Ecken eines Raumes, ist so ausgeschlossen.

Durch die Bildung von zusammengestellten Geräten werden dem Nutzer außerdem Dienste angeboten, die das Dienstangebot über die von den jeweiligen Einzelgeräten allein zu erbringenden Dienste hinaus erweitern. Wiederum wird der Nutzer davon entlastet, selbst nach Möglichkeiten der Kombination von Geräten zu suchen und gegebenenfalls erforderliche Treiber- oder Protokollumsetzungsprogramme zu beschaffen.

Bei einer Weiterbildung wird das automatische Auswählen von Geräten auf der Basis von Raumgrenzen bzw. von Raumnummern eines Gebäudes durchgeführt. Liegt das ermittelte Ortsdatum oder ein gespeichertes Ortsdatum nicht als Raumnummer vor, so wird es in eine Raumnummer umgewandelt. So werden Koordinaten mit Hilfe eines Gebäudeplans in Raumnummern umgewandelt.

Bei einer anderen Weiterbildung wird abhängig von Ortsangaben ausgewählt, die Koordinatenangaben enthalten. Zum Beispiel mit Hilfe eines globalen Positionierungssystems, z. B. mit Hilfe des GPS (Global Positioning System) lassen sich die Gerätestandorte einer Vielzahl von Geräten auf einfache Art ermitteln. Auch ist eine Umwandlung von Raumdaten in Koordinatenangaben mit Hilfe von Gebäudeplänen möglich. Beim Auswählen der Geräte wird auch ein Umkreisdatum vorgegeben, beispielsweise mit einem Wert von 5 m oder von 10 m. Dies bietet den Vorteil, dass auch Geräte einbezogen werden können, die in einem Nachbarraum zu dem Raum angeordnet sind, in dem sich der Nutzer gerade aufhält.

Als Geräte werden bei Weiterbildungen verwendet:
- ein Bildprojektor,
- ein Bildschirm,
- eine Bildaufnahmeeinheit, insbesondere eine Kamera,
- ein Telefon, insbesondere ein Festnetztelefon oder ein Mobilfunktelefon, und/oder
- eine Datenverarbeitungsanlage, insbesondere eine tragbare Datenverarbeitungsanlage, wie ein Notebook oder eine bei der Bedienung in der Hand gehaltene Datenverarbeitungsanlage.

Bei einer nächsten Weiterbildung werden dem Nutzer Geräte fest zugeordnet, die unabhängig von dem erzeugten Ortsdatum in die Statusmeldung aufgenommen werden sollen und aufgenommen werden. Damit erhält der Nutzer die Möglichkeit, Dienstverknüpfungen der abhängig von Ortsdaten ermittelten Dienste mit Diensten für die fest zugeordneten Geräte zu verknüpfen, beispielsweise eine Rufumleitung von einem fest zugeordneten Gerät zu einem in seiner momentanen Umgebung aufgestellten Gerät.

Bei einer anderen Weiterbildung betrifft ein angebotener Dienst eine Multimediakommunikation, die mit Hilfe eines zusammengestellten Gerätes durchgeführt wird. Dem zusammengestellten Gerät wird ein Sammelkennzeichen zugeordnet, unter dem es erreichbar ist bzw. das als Absendedatum angegeben wird, wenn von dem zusammengestellten Gerät aus andere Geräte angewählt werden. Bei einer Weiterbildung ist das Sammelkennzeichen ein Gerätekennzeichen, das auch einem der Geräte des zusammengestellten Gerätes zugeordnet ist, insbesondere einem Kommunikationsgerät, das eine Rufnummer oder eine Internetadresse hat.

Bei einer nächsten Weiterbildung werden im Rahmen einer Verbindung, die mit Hilfe des Sammelgerätekennzeichens aufgebaut worden ist oder bei der das Sammelgerätekennzeichen als Absender angegeben worden ist, mindestens zwei verschiedene Arten von Nutzdaten empfangen und automatisch abhängig von der Art der Nutzdaten an mindestens zwei Geräte des zusammengestellten Gerätes weitergeleitet. Alternativ oder kumulativ werden von mindestens zwei Geräten kommende Nutzdatenströme automatisch an eine Gegenstelle weitergeleitet.

Das Gerät, dessen Gerätekennzeichen als Sammelgerätekennzeichen verwendet wird, wird auch als Mastergerät bezeichnet. Bei einer Ausgestaltung wird der Verbindungsaufbau und der Verbindungsabbau zu den anderen Geräten abhängig von Eingaben an dem Mastergerät automatisch durchgeführt.

Bei einer nächsten Weiterbildung wird während der Nutzung eines angebotenen Dienstes mindestens ein Ortsdatum aktualisiert, insbesondere das den Aufenthaltsort des Nutzers betreffende Ortsdatum oder eines Ortdatums eines an der Erbringung eines momentan vom Nutzer genutzten Dienstes beteiligten Gerätes. Abhängig von dem geänderten Ortsdatum wird eine Statusänderungsmeldung erzeugt, in der einem aktuell genutzten Dienst ein anderes Gerät zugeordnet ist oder in der auf die Möglichkeit einer anderen Zuordnung eines Gerätes zu einem aktuell genutzten Dienst hingewiesen wird oder in der ein aktuell genutzter Dienst als nicht mehr verfügbar vermerkt ist. Der Nutzer entscheidet sich manuell für das andere Gerät. Bei einer alternativen Weiterbildung wird automatisch auf das andere Gerät umgeschaltet. Diese Funktion wird insbesondere bei einem Raumwechsel eingesetzt.

Die Erfindung betrifft außerdem eine Einheit zum Ermitteln nutzbarer Dienste. Die Einheit eignet sich insbesondere zur Durchführung des erfindungsgemäßen Verfahrens, so dass die oben genannten technischen Wirkungen gelten.

Die Erfindung betrifft auch eine Steuereinheit mit einer Verteilungseinheit, die bei einer eintreffenden Kommunikationsanforderungsmeldung wie ein Gerät für die in der Kommunikationsanforderungsmeldung angegebenen Dienste gegenüber einem Kommunikationspartnergerät auftritt und die mindestens zwei eintreffende Medienströme auf mindestens zwei verschiedene Geräte verteilt. Alternativ oder kumulativ enthält die Steuereinheit eine Bündelungseinheit, die bei abgehenden Kommunikationsanforderungsmeldungen Medienströme von mindestens zwei Einzelgeräten zusammenfasst und die als ein Gerät mit verschiedenen Diensten gegenüber einem Kommunikationspartnergerät auftritt. Somit gelten für die Steuereinheit die oben für ein zusammengestelltes Terminal genannten technischen Wirkungen.

Im Folgenden werden Ausführungsbeispiele der Erfindung an Hand der anliegenden Zeichnungen erläutert. Darin zeigen:
- Figur 1: Verfahrensschritte zum Ermitteln der nutzbaren Dienste für einen Nutzer, dessen Aufenthaltsort automatisch ermittelt wird, und
- Figur 2: eine Modifikation des Verfahrens gemäß Figur 1, wobei der Aufenthaltsort des Nutzers vom Nutzer eingegeben wird.

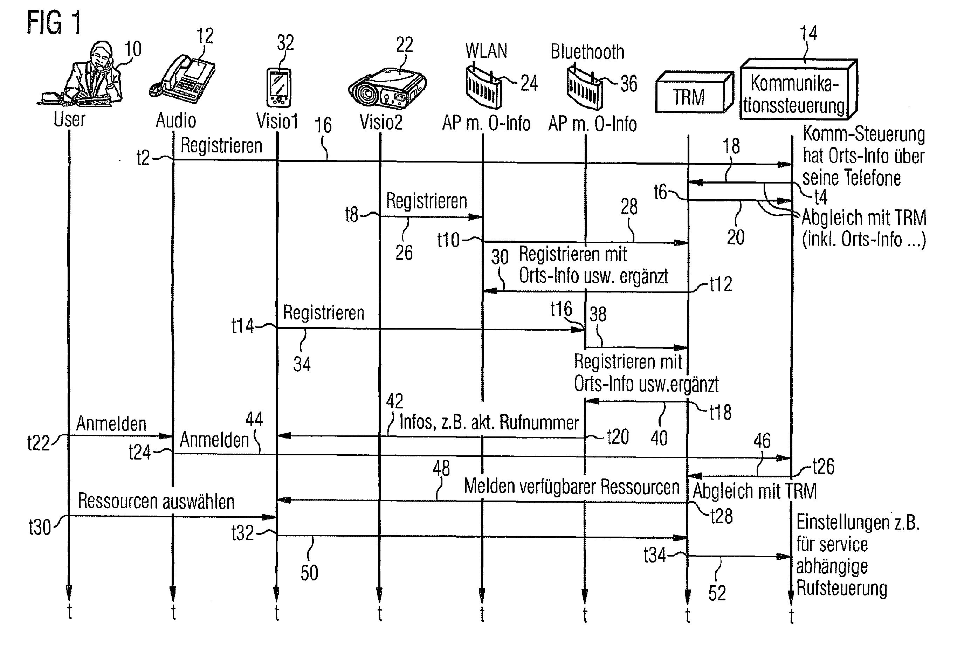

Figur 1 zeigt Verfahrensschritte zum Ermitteln der von einem Nutzer 10 nutzbaren Dienste, wobei der Aufenthaltsort des Nutzers 10 indirekt über den Standort eines Telefons 12 ermittelt wird, an dem sich der Nutzer 10 anmeldet.

Vor dem Anmelden werden jedoch eine Reihe von Vorbereitungsschritten durchgeführt. Zu einem Zeitpunkt t2 wird das Telefon 12 an eine Telekommunikationsanlage 14 angesteckt, beispielsweise an eine Telekommunikationsanlage der Firma Siemens vom Typ Hicom oder vom Typ HiPath. Alternativ wird eine im Leistungsumfang vergleichbare Telekommunikationsanlage eines anderen Herstellers verwendet. Unmittelbar nach dem Einstecken erzeugt das Telefon 12 zum Zeitpunkt t2 eine Registriermeldung 16. In der Telekommunikationsanlage 14 ist automatisch oder manuell der Raum vermerkt worden, in dem das Telefon 12 steht.

Zu einem Zeitpunkt t4 sendet die Telekommunikationsanlage 14 an eine Steuereinheit TRM eine Abgleichsmeldung 18, in der das hinzugekommene Telefon 12 mit den von ihm unterstützten Diensten (z.B. Audio + SMS) sowie der Raum vermerkt sind, in dem das Telefon 12 steht. zu einem Zeitpunkt t6 sendet die Steuereinheit TRM eine Bestätigungsmeldung 20 an die Telekommunikationsanlage 14.

Zu einem nach dem Zeitpunkt t2 liegenden Zeitpunkt t8 wird in dem gleichen Raum, in dem das Telefon 12 aufgestellt ist, ein Bildprojektor 22 installiert, der auch als Beamer bezeichnet wird. Der Bildprojektor 22 wird über eine Funkschnittstelle an einem Datenpaketübertragungsnetz betrieben. Die Funkübertragungsstrecke endet an einer Zugangseinheit 24, die auch als Access Point bezeichnet wird und sich im gleichen Raum wie das Telefon 12 befindet. Beispielsweise ist das Datenpaketübertragungsnetz ein sogenanntes WLAN (Wireless Local Area Network). Zum Zeitpunkt t8 wird der Bildprojektor 22 erstmals in Betrieb genommen, woraufhin eine Registriermeldung 26 von dem Bildprojektor 22 automatisch an die Zugangseinheit 24 gesendet wird. Beim Bearbeiten der Registriermeldung 26 sendet die Zugangseinheit 24 zu einem Zeitpunkt t10 eine Registriermeldung 28 an die Steuereinheit TRM. In der Registriermeldung 28 sind Angaben zum Gerätetyp des Projektors 22 sowie die Raumnummer des Raums angegeben, in dem der Bildprojektor 22 steht.

Beim Bearbeiten der Registriermeldung 28 in der Steuereinheit TRM wird eine Geräteliste aktualisiert, in der die Geräte, ihre Dienste und zugehörige Raumnummern angegeben sind. Zu einem Zeitpunkt t12 bestätigt die Steuereinheit TRM die Registriermeldung 28 mit einer Bestätigungsmeldung 30.

vor dem Anmelden des Nutzers 10, aber nachdem der Nutzer 10 den Raum betritt, in dem das Telefon 12 aufgestellt ist, sendet ein mobiler Rechner 32, der vom Nutzer 10 mitgeführt wird, zu einem Zeitpunkt t₁₄ automatisch oder auf Veranlassung des Nutzers 10 eine Registriermeldung 34 bspw. über eine Bluetooth-Schnittstelle an eine Zugangseinheit 36, die sich im gleichen Raum wie das Telefon 12 befindet.

In der Registriermeldung 34 werden der Gerätetyp des mobilen Rechners 32 und gegebenenfalls auch Informationen über seinen Nutzer angegeben. Zu einem Zeitpunkt t16 wird aufgrund der Registriermeldung 34 in der Zugangseinheit 36 bzw. in einer Steuereinheit eines mit der Zugangseinheit 36 verbundenen Datenpaketübertragungsnetzes eine Registriermeldung 38 erzeugt und an die Steuereinheit TRM gesendet. Die Registriermeldung 38 enthält den Gerätetyp des mobilen Rechners 32 und die Raumnummer des Raums, in dem die zugangseinheit 36 aufgestellt ist. Die Registriermeldung 38 wird von der Steuereinheit TRM zu einem zeitpunkt t18 mit einer Bestätigungsmeldung 40 bestätigt. Aufgrund der Bestätigungsmeldung 40 erzeugt die Zugangseinheit 36 oder eine Steuereinheit in dem Datenpaketübertragungsnetz, in dem die zugangseinheit 36 betrieben wird, zu einem Zeitpunkt t₂₀ eine Informationsmeldung 42, die an den Rechner 32 gesendet wird. Die Informationsmeldung 42 enthält beispielsweise eine Bestätigung über die Anmeldung und eine aktuelle Rufnummer, z.B. die des Telefons 12.

Ein Mastergerät für ein zusammengestelltes Terminal muss per Rufnummer adressierbar sein und kann mit dem Bediengerät bzw. Bezugsgerät identisch sein, muss aber nicht, wie gezeigt (Mastergerät = Telefon, Bediengerät = PDA). Das Bediengerät ist das Gerät, über das die Steuereinheit TRM mit dem Nutzer 10 kommuniziert.

Prinzipiell sind bspw. drei Wege möglich:
1. Das Master- und das Bedien-Gerät sind identisch (z.B. PDA mit GSM, wie der "Nokia Communicator") : In diesem Fall bringt der Nutzer 10 quasi seine Rufnummer mit. Rufnummer. Die Rufnummer in der Informationsmeldung 42 ist die des mobilen Master-Geräts.
2. Das Bediengerät (hier PDA) ist selbst unter keiner Rufnummer zu erreichen. Hier wird dann ein adäquates Gerät zum Mastergerät ernannt; im Beispiel das Telefon 12. Die Rufnummer in der Informationsmeldung 42 ist die Rufnummer des Telefons 12
3. Mehrere Geräte eines Szenarios sind über Rufnummern erreichbar. Eines dieser Geräte wird zum Mastergerät ernannt, wobei dann wie unter 2. verfahren wird.

Damit sind die Vorbereitungen für das automatische Ermitteln der Dienste abgeschlossen. Zu einem Zeitpunkt t22 meldet sich der Nutzer 10 am Telefon 12 an, beispielsweise durch wählen einer Servicenummer unter Eingabe einer Kennung und gegebenenfalls auch eines Passworts. Zu einem Zeitpunkt t24 wird eine Anmeldemeldung 44 vom Telefon 12 zur Telekommunikationsanlage 14 übertragen. Die Telekommunikationsanlage 14 ist aufgrund der Bestätigungsmeldung 20 so geschaltet worden, dass sie aufgrund der Anmeldemeldung 44 die Steuereinheit TRM zu einem Zeitpunkt t26 mit einer Benachrichtigungsmeldung 46 benachrichtigt vom Anmeldevorgang des Nutzers 10. Aufgrund der Benachrichtigungsmeldung 46 meldet die Steuereinheit TRM zu einem Zeitpunkt t28 alle für den Nutzer verfügbaren Dienste und Geräte an den mobilen Rechner 32 mit Hilfe einer Statusmeldung 48. Die Statusmeldung 48 enthält dabei die folgenden Gerätegruppen:
- Geräte, die im Raum aufgestellt sind, in dem sich der Nutzer 10 befindet, d.h. eine Angabe zum Telefon 12, zum Bildprojektor 22 und zum Rechner 32, gegebenenfalls werden nur die Geräte angezeigt, die auch eingeschaltet sind bzw. die zur Nutzung durch den Nutzer 10 freigeschaltet sind,
- Geräte, die dem Nutzer 10 administrativ fest zugeordnet worden sind, beispielsweise sein privates oder dienstliches Telefon, sein privates oder dienstliches Faxgerät und seine private bzw. dienstliche E-Mailadresse,
- optional, sogenannte zusammengestellte Geräte, beispielsweise, falls sich in seinem mobilen Rechner 32 auch eine Kamera befindet, ein Bildtelefon, das aus dem Telefon 12 und dem mobilen Rechner 32 besteht, wobei die Anzeigeeinheit des Rechners 32 als Bildausgabeeinheit genutzt wird.

Zu einem Zeitpunkt t30 wählt der Nutzer 10 einen angebotenen Dienst aus oder verknüpft angebotene Dienste. Im Ausführungsbeispiel möchte der Nutzer 10 Anrufe von seinem dienstlichen Telefon auf das Telefon 12 umleiten. Nach einer entsprechenden Eingabe zu einem Zeitpunkt t32 erzeugt der Rechner 32 eine Dienstnutzungsmeldung 50, die an die Steuereinheit TRM gesendet wird. Die Steuereinheit TRM sendet zu einem Zeitpunkt t34 eine Einstellungsmeldung 52 an die Kommunikationssteuerung 14. Ist das Diensttelefon des Nutzers 10 auch an die Kommunikationsanlage 14 angeschlossen, so kann die Telekommunikationsanlage 14 die Rufumleitung selbst veranlassen. Befindet sich das Diensttelefon des Nutzers 10 dagegen an einer anderen Telekommunikationsanlage, so kann die Steuereinheit TRM über eine geeignete Schnittstelle zu dieser Telekommunikationsanlage (z.B. CTI) die Rufumleitung veranlassen.

Bei einem anderen Ausführungsbeispiel meldet sich der Nutzer 10 nicht am Telefon 12, sondern mit Hilfe des mobilen Rechners 32 bei der Steuereinheit TRM direkt an. Bei einem anderen alternativen Ausführungsbeispiel werden die Ortsinformationen in einer Datenbank gespeichert, auf die die Steuereinheit TRM Zugriff hat. Alternativ werden die Ortsinformationen bei verschiedenen Datenbanken gezielt abgefragt, nachdem der Aufenthaltsort des Nutzers 10 bekannt ist, beispielsweise durch eine Anfrage an der Telekommunikationsanlage 14, mit der alle Telefone ermittelt werden sollen, die in dem Raum aufgestellt sind, in dem sich der Nutzer 10 gerade angemeldet hat.

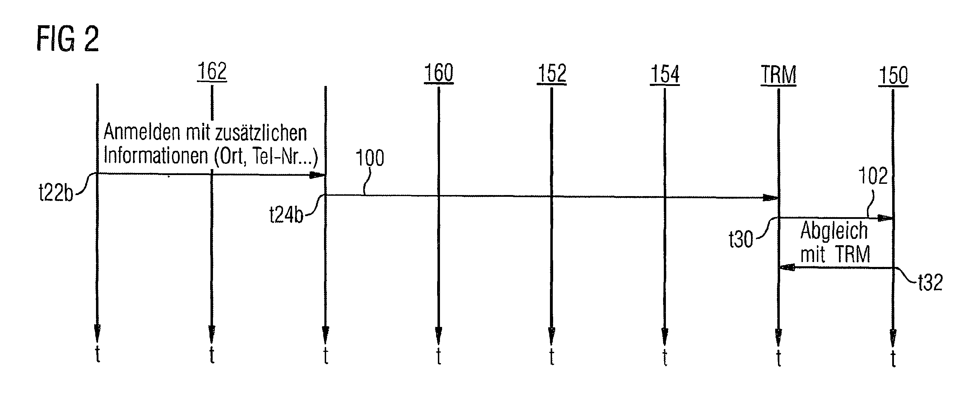

Figur 2 zeigt ein Ausführungsbeispiel, bei dem die Ortsinformation über den Aufenthaltsort des Nutzers 10 nicht automatisch ermittelt wird, beispielsweise weil eine öffentliche Infrastruktur genutzt wird, z.B. die Infrastruktur eines Hotels. Im Ausführungsbeispiel wird über ein WEB-Interface vom mobilen Rechner 32 Kontakt mit der Steuereinheit TRM aufgenommen, um die notwendigen Informationen zu registrieren. Zu einem Zeitpunkt t22b gibt der Nutzer 10 in seinen mobilen Rechner 32 die erforderlichen Daten ein, insbesondere das Ortsdatum zu seinem Aufenthaltsort und ein Datum über eine Telefonnummer, unter der er erreichbar ist.

Zu einem Zeitpunkt t24b sendet der mobile Rechner 32 über das Internet eine Anmeldemeldung 100 direkt an die Steuereinheit TRM. Die Steuereinheit TRM aktualisiert ihre Ortsdaten und Gerätedaten. Beispielsweise wird zu einem Zeitpunkt t30 eine Abgleichsmeldung 102 an eine Kommunikationssteuerung 150 des Hotels gesendet. Die Kommunikationssteuerung 150 teilt der Steuereinheit TRM zu einem Zeitpunkt t32 Ortsinformationen über die nutzbaren Geräte und Dienste mit, die in dem gleichen Raum des Hotels aufgestellt sind, in dem sich auch der Nutzer 10 befindet, beispielsweise Informationen über Zugangseinheiten 152 und 154 und über Geräte 160 und 162, die der Nutzer 10 als Hotelgast nutzen kann, beispielsweise ein Telefon oder ein Faxgerät. Im übrigen werden in der Hotel-Infrastruktur ähnliche Vorgänge durchgeführt, wie oben an Hand der Figur 1 erläutert.

zusammenfassend gilt, dass auch eine Realisierung eines "zusammengestellten Multimedia-Kommunikationsterminals" (ZMK) angegeben wird, das zusammengestellt ist aus zunächst unabhängig voneinander betreibbaren Kommunikationsgeräten unter gemeinsamer Koordination durch ein "Terminalressourcen-Management" (TRM), das auch kurz als Steuereinheit TRM bezeichnet wird. Die logische Beziehung z.B. zwischen einem Telefon und einem PDA (Personal Digital Assistant), d.h. einem mobilen Rechner 32, dessen grafische Ein- und Ausgabemöglichkeit additiv zum Telefon benutzt werden soll, wird dann administrativ über die Steuereinheit TRM oder ad hoc hergestellt, wobei die Zuordnung der Steuereinheit TRM dynamisch mitgeteilt wird. Gerade die dynamische Mitteilung ermöglicht es, bei Bedarf z.B. aus einem Handy (Audio) und einem sich im Bereich eines WLAN - sogenannten Hot Spots - befindlichen PDA (Video) und/oder Daten einen Multimediaterminal zu bilden und im selben Ruf, z.B. unter einer identischen Rufnummer, zu verwenden. Aus Sicht des Kommunikationspartners wird einfach nur ein weiterer Dienst, z.B. Video verfügbar, während tatsächlich ein weiteres Gerät, nämlich der PDA, dem Szenario hinzugefügt wird, welches physikalisch sogar einem anderen Netz zugeordnet sein kann, im Beispiel ist das Handy dem GSM-Netz (Global System Mobile), und der PDA bzw. der mobile Rechner 32 dem WLAN-IP-Netz (Wireless Local Area Network/Internet Protocol) zugeordnet.

Bei einem Ausführungsbeispiel wird die Anzeigeeinheit des PDA über ein auf dem PDA gespeichertes Videoabspielprogramm angesteuert, das Videodaten anzeigt, die zu dem PDA gesendet werden. Für eine Bildaufnahme wird eine Kamera genutzt, die im PDA integriert ist, die an den PDA angeschlossen ist oder die sich in der Nähe des PDA befindet. Das Videoabspielprogramm wird von der Steuereinheit TRM z.B. über eine Internetadresse und eine Portnummer adressiert. Die Steuereinheit TRM übermittelt an die Kamera ebenfalls eine Internetadresse und eine Portnummer, an welche die Kamera die Bilddaten senden soll. Die Steuereinheit TRM emuliert zur Gegenseite hin bspw. ein H.323 Endgerät oder SIP-Endgerät (Session Initiation Protocol), wobei die eigentlichen Datenströme (Audio, Video usw.) den TRM nicht notwendigerweise passieren müssen. Eine evtl. für die Endgeräte-Emulation notwendige Medien-Wandlung (Interworking) wird automatisch von der Steuereinheit TRM veranlasst. Die Steuerungseinheit TRM beeinflusst ggf. die Leitwege für diese Medien, transportiert/modifiziert aber diese nicht selbst.

Bei einem zusammengestellten Gerät wirkt die Steuereinheit TRM bspw. auf mindestens eine in den beteiligten Netzen benutzte Kommunikationssteuerung ein. Die Kommunikationssteuerung lässt sich zentral oder dezentral ausführen. Die Steuereinheit TRM wirkt derart auf die Kommunikationssteuerung ein, dass:
- bei eintreffenden Kommunikationswünschen bzw. Verbindungsanforderungen die verschiedenen Medienströme auf die verschiedenen Geräte verteilt werden, so dass sich ein logisches bzw. virtuelles Gerät für alle angeforderten Dienste ergibt,
- bei abgehenden Kommunikationswünschen bzw. Verbindungsanforderungen die Einzelgeräte bzw. Komponenten des zusammengestellten Multimediaterminals sich dem Gesamtsystem gegenüber wie ein Multimediaterminal verhalten und dem System gegenüber unter einer gemeinsamen Rufnummer/Adresse mit verschiedenen Services bzw. Diensten auftreten.

Die Steuereinheit TRM verwaltet die Zuordnung zwischen der Rufnummer/Adresse und den Diensten für jedes zusammengestellte Multimediakommunikationsterminal und den für den jeweiligen Service zuständigen als ZMK-Komponenten fungierenden Geräten bzw. deren Adressen. Die Rufnummer/Adresse eines ZMK ist dabei identisch mit der eines der zugeordneten Geräte, das als Mastergerät arbeitet. Bei einem anderen Ausführungsbeispiel wird aber eine spezielle Rufnummer/Adresse verwendet, die nur zum Zwecke der Adressierung des ZMK vergeben worden ist.

Abhängig davon, wie die Kommunikation von Einzelgeräten zu einem ZMK erfolgen soll, ergeben sich die folgenden Möglichkeiten:
- statisch per Administration, wobei keine explizite Unterstützung durch die ZMK-Komponenten erforderlich ist,
- dynamisch bzw. ad hoc, wobei die ZMK-Komponenten das An- und Abmelden am ZMK unterstützen und wobei Informationen zu übergeben sind, an Hand derer entschieden werden kann, welche Geräte sinnvoll zu ZMK kombiniert werden können.

Über Schnittstellen zur Kommunikations-Steuerung hin, beeinflusst das TRM z.B. die Routing-Entscheidung der Steuerung im Sinne der hier beschriebenen Erfindung.

Es ergeben sich unter anderem die folgenden Vorteile:
- die Einzelgeräte bzw. die Komponenten eines ZMK benötigen keine zusätzlichen Schnittstellen zur direkten Ankopplung an ein zu steuerndes Gerät. Es werden ausschließlich ohnehin schon vorhandene physikalische Schnittstellen benutzt, d.h. sogenannte "native interfaces".
- Die Einzelgeräte müssen selbst keine koordinierende Funktionen übernehmen, so dass auch kein Gerät aufgrund der für solche Funktionen notwendigen und gegebenenfalls fehlenden Ressourceanforderungen von dem erläuterten Verfahren ausgeschlossen ist.
- verbindungsanforderungen können frühzeitig mit Hilfe des TRM bewertet und aufgrund des Bewertungsergebnisses abgelehnt, oder falls erforderlich, nach Medientypen getrennt den verschiedenen Geräten bzw. verschiedenen Komponenten des ZMK zugestellt werden.
- Die Dienste können von den Kommunikationspartnern in gewohnter Weise genutzt werden, ohne dass dafür physikalische Besonderheiten, z.B. Netzübergänge oder andere Rufnummern/Zieladressen zu beachten wären.

Bei den erwähnten Geräten und Medien handelt es sich nur um Beispiele. Nicht explizit genannte Anwendungen wie eMail usw. werden bei anderen Ausführungsbeispielen auf ähnliche Art und Weise eingebunden.

Bei der Zusammenstellung einzelner Geräte zu einem ZMK werden Kriterien genutzt, nach denen die zunächst unabhängigen Geräte einander zugeordnet werden. Abhängig von der der konkreten Implementierung zugrundeliegenden Netzinfrastruktur hat man es gegebenenfalls mit einer reinen Geräteadressierung zu tun, wie heute im Telefon-Festnetz, die es erforderlich macht, dem Anwender, beispielsweise ortsabhängig und temporär, ein Mastergerät zuzuordnen, an dem die weitere Adressierung festgemacht werden kann.

Verwendet werden beispielsweise die folgenden Kriterien:
1. Räumliche Nähe der zu verknüpfenden Geräte, wobei man Ortsdaten benötigt, die den Aufstellungsort der beteiligten Geräte und auch den Aufenthalt des Anwenders selbst bzw. dessen Mastergeräte angeben. Beispielsweise befindet sich der Anwender im Funkbereich des Bluetooth-Access Point 36, der beispielsweise eine Reichweite im Bereich von 3 Metern bis 10 Metern hat. Alle Geräte in diesem räumlichen Umfeld werden dem Anwender zur Verwendung angeboten, wobei sie - sofern ausgewählt - automatisch unter der Adresse des Anwenders, typischerweise z. Zt. unter dessen Rufnummer, aber in künftigen Systemen auch unter dessen Namen (allgemein "Alias" genannt) von Kommunikationspartnern ansprechbar wären. Bspw. wird eine SMS (short massage service) oder eine MMS (multimedia massage service) unter Anwahl der Rufnummer des Telefons 12 auf dem Bildprojektor 22 angezeigt. Zusätzlich werden beispielsweise optional Regeln über die zulässigkeit einer Verknüpfung einbezogen. Es macht beispielsweise wenig Sinn, einem Handy-Besitzer sämtliche Headsets eines Konferenzraums als mögliche Ein-/Ausgabegeräte anzubieten. Anders ist es dagegen bei einem Faxgerät, das sich ebenfalls im Konferenzraum befindet. Hier kann es durchaus sinnvoll sein, dass es mehreren oder allen Konferenzteilnehmern zur Verfügung gestellt wird.
2. Logische Zuordnung zum Anwender bzw. zu dessen Mastergerät, wobei beispielsweise der Empfang von Faxen auf dem Faxgerät im Büro des Anwenders auch während dessen Abwesenheit sinnvoll ist, d.h. wie eine dauerhafte Zuordnung getroffen wird. Details über solche Zuordnungen sind dem Fachmann bekannt.
3. Kombinationen aus 1. und 2. Aufgrund bestimmter Ereignisse, z.B. von Anwenderreaktionen oder von Systemereignissen und Regeln, werden z.B. die in 2. besprochenen logischen Zuordnungen zugunsten räumlicher Gegebenheiten (1.) temporär oder dauerhaft modifiziert. Um beim obigen Beispiel zu bleiben, können so Faxe temporär statt im heimischen Büro im Konferenzraum empfangen werden.

Die Aufgabe des Terminal-Ressourcen-Managements TRM bzw. der Steuereinheit TRM ist es, diese Verknüpfungen zu realisieren. Zur Entscheidung werden vordefinierte Regeln und/oder Anwendereingaben herangezogen. Die dazu notwendigen Informationen bezüglich Präsenz und Standort stammen dabei vom Anwender, von den Geräten selbst oder ihren Netzzugängen bzw. Access Points. Das TRM sammelt diese Informationen und informiert gegebenenfalls die Kommunikationssteuerung bzw. die zuständige Instanz im Falle von verteilten Steuerungen über z.B. Rufumleitungen oder es baut Aktivverbindungen auf, beispielsweise sogenannte Third Party Calls, falls die Kommunikationssteuerung serviceabhängiges Routen nicht unterstützt.

Die zuletzt beschriebenen Interaktionen zwischen TRM und der Kommunikationssteuerung erfordern ein Interface zwischen den beiden, das sowohl dem TRM die notwendigen Informationen bereitstellt als auch entsprechende Befehle an die Kommunikationssteuerung weiterleitet, die sie dann ausführt. Ist die Kommunikationssteuerung eine Telekommunikationsanlage, so lassen sich CTI-Funktionen (Computer Telephony Integration) nutzen. Im Zusammenhang mit solchen Funktionen wird auf den Standard CSTA I bis III usw. (Computer Supported Telecommunication Application) der ECMA (European Computer Manufacturer Association) verwiesen. Bei anderen Kommunikationssteuerungen werden bspw. den CSTA-Funktionen ähnliche Funktionen verwendet.

Wie an Hand der Figur 1 erläutert, können sich alle beteiligten Nutzer und Geräte an Access Points mit Orts-Informationen anmelden bzw. registrieren. Die Zuordnung Nutzer 10 und mobiler Rechner 32 lässt sich beispielsweise administrativ vorgeben. Die Zuordnung des Nutzers 10 zum Telefon 12 geschieht beispielsweise implizit durch das Anmelden über das Telefon 12.

Wie an Hand der Figur 2 erläutert worden ist, sind die Verfahren auch dann einsetzbar, wenn sich bestimmte Ortsinformationen nicht automatisch ermitteln lassen, z.B. bei einer öffentlichen Infrastruktur in einem Hotel. Hier wird z.B. über ein Web-Interface Kontakt mit dem TRM aufgenommen, um die nötigen Informationen zu registrieren. Die Zuordnung Nutzer 10 und mobiler Rechner 32 sei auch hier beispielsweise administrativ vorgegeben. Die Zuordnung Nutzer 10 und Telefon in dem Hotel kann z.B. durch die explizite Angaben beim Anmelden am TRM erfolgen.

Aus den gewonnenen Informationen ist der TRM in der Lage, die koordinierenden Steuerkommandos an die Kommunikationssteuerung zu erarbeiten. Abhängig von der Leistungsfähigkeit dieser Steuerung wird der TRM beispielsweise auch in die Call-Behandlung mit eingebunden, damit fehlende Funktionalitäten der Kommunikationssteuerung vom TRM eingefügt werden können, beispielsweise Protokollumsetzungen oder Treiberfunktionen.

Das Gegen-Extrem besteht darin, dass der TRM quasi stellvertretend für die Kommunikationssteuerung Calls entgegennimmt, um daraus Informationen zu gewinnen, mit denen er dann die Kommunikationssteuerung beeinflusst. Diese Eigenschaft wird auch als "Proxy"-Funktion bezeichnet.

Die vom TRM vorgenommenen Einstellungen haben unter anderem die Aufgabe:
- eingehende Calls bzw. eingehende Daten gemäß ihrem Service den passenden und zugeordneten Geräten zuzustellen, und bei
- ausgehenden Calls bzw. ausgehenden Daten Adressinformationen einzufügen, an Hand der es später möglich ist, z.B. einen Rückruf einzuleiten.

Gerade letzteres wird möglicherweise auch von den Geräten selbst schon unterstützt, weshalb intelligentere Geräte bei ihrer Registrierung die dafür notwendigen Daten bereits mitgeteilt bekommen, siehe beispielsweise die oben erläuterten Unterschiede bei der Registrierung des mobilen Rechners 32 und des Bildprojektors 22.

Bei einem anderen Ausführungsbeispiel werden aufgrund der Ortsdaten Geräte ermittelt, die dann nicht in die Statusmeldung aufgenommen werden, weil ihre Nutzung für den Nutzer gesperrt ist oder weil sie nicht einsatzbereit sind. Alternativ werden solche Geräte zwar in die Statusmeldung aufgenommen, jedoch als gesperrt oder anderweitig nicht verfügbar gekennzeichnet.

## Patentansprüche

1. Verfahren zum Ermitteln nutzbarer Dienste,
bei dem die folgenden Schritte ausgeführt werden:
- Speichern von Ortsdaten für nehrere Geräte (12, 32) in einer Steuereinheit (TRM), wobei ein jeweiliges Ortsdatum jeweils eine Angabe über den Aufstellungsort des jeweiligen Gerätes (12, 32) enthält,
- Ermitteln (44) eines Ortsdatums, das den Aufenthaltsort eines Nutzers (10) oder eines Kommunikationspartners des Nutzers (10) angibt,
- in Abhängigkeit von dem ermittelten Ortsdatum des Aufenthaltsortes und den gespeicherten Ortsdaten der mehreren Geräte (12, 32; automatisches Auswählen (t30) mindestens eines der mehreren Geräte (12, 32), das von dem Nutzer (10) genutzt werden kann,
- übertragen einer Statusmeldung (48) von der Steuereinheit (TRM) zu einem der mehreren Geräte (12, 32) oder zu einem vom Nutzer (10) genutzten Bezugsgerät (32), wobei mit der Statusmeldung (48) dem Nutzer (10) die Nutzung mindestens eines Dienstes angeboten wird, der durch ein aus den mehreren Geräten (12, 32) zusammengestelltes Gerät erbracht wird,
- dem zusammengestellten Gerät wird ein Sammelgerätekennzeicher zugeordnet,
- Erzeugen einer Verbindungsanforderung, die das Sammelgerätekennzeichen als Kennzeichnen eines rufenden oder eines gerufenen Endgerätes aus den mehreren Geräten (12, 32) enthält,
- wobei im Verlauf einer aufgrund der Verbindungsanforderung aufgebauten Verbindung mindestens zwei verschiedene Arten von Nutzdaten empfangen werden, wobei die Nutzdaten automatisch abhängig von der Art der Nutzdaten an mindestens zwei der mehreren Geräte (12, 32) des zusammengestellten Gerätes automatisch weitergeleitet werden bzw. von mindestens zwei Geräten des zusammengestellten Gerätes kommen,
- wobei das zusammengestellte Gerät derart zusammengestellt ist, dass im Rahmen einer Nutzung des Dienstes eine auftretende erste Art von Nutzdaten an ein erstes (12) der mehreren Geräte und eine auftretende zweite Art von Nutzdaten an ein zweites (32) der mehreren Geräte koordiniert übermittelt wird.

2. Verfahren nach Anspruch 1, **dadurch gekennzeichnet, dass** das erzeugte Ortsdatum einen Raum in einem Gebäude bezeichnet oder dass aus dem ermittelten Ortsdatum ein Raum in einem Gebäude ermittelt wird,
und dass aus den mehreren Geräten mindestens ein Gerät (22) ausgewählt wird, dessen Ortsdatum den ermittelten Raum bezeichnet.

3. Verfahren nach Anspruch 1 oder 2, **dadurch gekennzeichnet, dass** das ermittelte Ortsdatum zwei oder drei Koordinatenangaben enthält,
dass mindestens ein Umkreisdatum vorgegeben wird, das eine Entfernung festlegt, vorzugsweise eine Entfernung kleiner 10 Meter,
und dass abhängig von dem Umkreisdatum aus der mehreren Geräten mindestens ein Gerät (22) ausgewählt wird, dessen Ortsdatum einen Ort bezeichnet, der in dem durch das Umkreisdatum festgelegten Umkreis um den Ort liegt, der durch die Koordinatenangaben angegeben wird.

4. Verfahren nach einem der vorhergehenden Ansprüche, **dadurch gekennzeichnet, dass** mindestens eines der mehreren Geräte ein Drucker, ein Bildprojector (22), ein Bildschirm (32), eine Bildaufnahmeeinheit, ein Telefon (12) oder eine Datenverarbeitungsanlage (32) ist.

5. Verfahren nach einem der vorhergehenden Ansprüche, **dadurch gekennzeichnet, dass** dem Nutzer (10) mindestens eines (32) der mehreren Geräte fest zugeordnet wird, das unabhängig von dem erzeugten Ortsdatum in die Statusmeldung (48) aufgenommen werden soll,
und dass aus den mehreren Geräten mindestens ein dem Nutzer fest zugeordnetes Gerät in die Statusmeldung (48) unabhängig von dem ermittelten Ortsdatum aufgenommen wird.

6. Verfahren nach einem der vorhergehenden Ansprüche, **dadurch gekennzeichnet, dass** ein Dienst eine Multimediakommunikation mit Hilfe des zusammengestellten Gerätes betrifft,
dass dem zusammengestellten Gerät als Sammelgerätekennzeichen, vorzugsweise ein Gerätekennzeichen, zugeordnet wird, das auch einem der mehreren Geräte des zusammengestellten Gerätes zugeordnet ist.

7. Verfahren nach einem der vorhergehenden Ansprüche, **dadurch gekennzeichnet, dass** während der Nutzung eines Dienstes mindestens ein Ortsdatum aktualisiert wird, das den Aufenthaltsort des Nutzers (10) oder den Aufstellungsort eines der mehreren Geräte betrifft, dessen Dienst gerade in Anspruch genommen wird,
und dass abhängig von dem geänderten Ortsdatum eine geänderte Statusmeldung erzeugt wird.

8. Verfahren nach Anspruch 6, **dadurch gekennzeichnet, dass** ein Gerät des zusammengestellten Gerätes ein Festnetztelefon (12) oder ein Mobilfunktelefon ist,
und dass ein Gerät des zusammengestellten Gerätes ein Bildwiedergabegerät (22) oder ein Bildaufnahmegerät ist.

9. Einheit zum Ermitteln nutzbarer Dienste,
mit einer Ortsermittlungseinheit, die ein Ortsdatum empfängt oder ermittelt, das den Aufenthaltsort eines Nutzers oder eines Kommunikationspartners des Nutzers (10) angibt,
mit einer Geräteermittlungseinheit, die abhängig von dem empfangenen oder ermittelten Ortsdatum und abhängig von gespeicherten Ortsdaten für mehrere Geräte (12, 32) automatisch mindestens ein Gerät (12, 32) auswählt, das von dem Nutzer genutzt werden kann,
und mit einer Statusmeldungserzeugungseinheit (TRM), die abhängig von den ausgewählten Geräten eine Statusmeldung (48) erzeugt, in der mindestens ein Dienst für ein aus mehreren ausgewählten Geräten zusammengestelites Gerät angegeben ist, welches derart ausgestaltet ist, dass im Rahmen einer Nutzung des Dienstes eine auftretende erste Art von Nutzdaten an ein erstes (12) der mehreren Geräte und eine auftretende zweite Art von zugeordneten Nutzdaten an ein zweites (32) der mehreren Geräte koordiniert übermittelt wird,
dass zur Durchführung der Übermittlung eine Steuereinheit (TRM) vorgesehen ist,
mit einer Verteilungseinheit, die bei einer eintreffenden Kommunikationsanforderungsmeldung wie ein Gerät für die in der Kommunikationsanforderungsmeldung angegebenen Dienste gegenüber einem Kommunikationspartnergerät auftritt und die mindestens zwei eintreffende Medienströme auf mindestens zwei verschiedene der mehreren Geräte verteilt,
und/oder mit einer Bündelungseinheit, die bei abgehenden Kommunikationsanforderungsmeldungen Medienströme von mindestens zwei Einzelgeräten zusammenfasst und die als ein Gerät mit verschiedenen Diensten gegenüber einem Kommunikationspartnergerät auftritt.

10. Einheit nach Anspruch 9, **dadurch gekennzeichnet, dass** die Ortsermittlungseinheit, die Geräteermittlungseinheit und die Statusmeldungserzeugungseinheit in einem Gerät (TRM) angeordnet sind.

## Claims

1. Method to determine useable services in which the following steps are carried out:
- storage of location data for a plurality of devices (12, 32) in a control device (TRM), wherein a particular location datum in each case contains information about the installation site of the particular device (12, 32),
- determination (44) of a location datum which indicates the current location of a user (10) or of a communication partner of the user (10),
- depending on the determined location data of the current location and the saved location data of the plurality of devices (12, 32), automatic selection (t30) at least of one of the plurality of devices (12, 32) which can be used by the user (10),
- transmission of a status message (48) by the control device (TRK) to one of the plurality of devices (12, 32) or to a reference device (32) used by the user (10), wherein by the status message (48) the user (10) is offered the use of at least one service, which is provided by a device composed of the plurality of devices (12, 32),
- a collective device label is assigned to the composed device,
- generation of a connection request which contains the collective device label as the label of a calling or a called end device from the plurality of devices (12, 32),
- whereby in the course of a connection established due to a connection request, at least two different kinds of message data are received, wherein the message data automatically depending on the type of message data are automatically forwarded to at least two of the plurality of devices (12, 32) of the composed device or come from at least two devices of the composed device,
- wherein the composed device is composed in such a way that, in the context of a use of the service, an arising first kind of message data is transmitted to a first (12) of the plurality of devices and an arising second kind of message data is transmitted to a second (32) of the plurality of devices in a coordinated manner.

2. Method according to claim 1, **characterised in that** the location datum generated designates a room in a building, or **in that** a room in a building is determined from the location datum determined,
and **in that** from the plurality of devices at least one device (22) is selected, the location datum of which designates the room determined.

3. Method according to claim 1 or 2, **characterised in that** the location datum determined contains two or three coordinate data,
**in that** at least one perimeter datum is provided which specifies a distance, preferably a distance of less than 10 metres,
and **in that**, depending on the perimeter datum of the plurality of devices, at least one device (22) is selected, the location datum of which designates a location which lies in the perimeter specified by the perimeter data, said location being indicated by the coordinate data.

4. Method according to any one of the preceding claims, **characterised in that** at least one of the plurality of devices is a printer, an image projector (22), a screen (32), an image recording unit, a telephone (12) or a data-processing installation (32).

5. Method according to any one of the preceding claims, **characterised in that** at least one (32) of the plurality of devices is permanently assigned to the user (10), wherein said device is to be included in the status message (48) regardless of the location datum generated, and that from the plurality of devices at least one device (48) permanently allocated to the user is included in the status message (48) regardless of the location datum determined.

6. Method according to any one of the preceding claims **characterised in that** a service concerns a multimedia communication with the help of the composed device, **in that** as a collective device label, preferably a device label is assigned to the composed device, said label also being assigned to one of the plurality of devices of the composed device.

7. Method according to any one of the preceding claims **characterised in that** during the use of a service, at least one location datum is updated which concerns the current location of the user (10) or the installation site of one of the plurality of devices, the service of which is currently being used,
and **in that** depending on the altered location datum, an altered status message is generated.

8. Method according to claim 6, **characterised in that** one device of the composed device is a landline telephone (12) or a mobile wireless telephone,
and **in that** one device of the composed device is an image display device (22) or an image recording device.

9. Unit to determine useable services, with a location determining unit which receives or determines a location datum which indicates the current location of a user or of a communication partner of the user (10),
with a device determining unit which, depending on the location datum received or determined and depending on the saved location data for a plurality of devices (12, 32), automatically selects at least one device (12, 32) which can be used by the user,
and with a status message generating unit (TRM) which, depending on the selected devices, generates a status message (48) in which at least one service is indicated for a device composed of a plurality of selected devices, said composed device being formed in such a way that in the context of a use of the service, an arising first kind of message data is transmitted to a first (12) of the plurality of devices and an arising second kind of assigned message data is transmitted to a second (32) of the plurality of devices in a coordinated manner, in that, to carry out the transmission, a control unit (TRM) is provided,
with a distribution unit which, in the event of an incoming communication request message, appears as a device for the services indicated in the communication request message a communication partner device and which distributes at least two incoming media flows on at least two different devices of the plurality of devices,
and / or with a trunking unit which, in the event of outgoing communication request messages, combines media flows from at least two individual devices and which appears as one device with various services to a communication partner device.

10. Unit according to claim 9, **characterised in that** the location determining unit, the device determining unit and the status message generation unit are arranged in one device (TRM).

## Revendications

1. Procédé de détermination de services utilisables,
dans lequel les étapes suivantes sont exécutées :
- enregistrer des données de position pour plusieurs appareils (12, 32) dans une unité de commande (TRM), dans lequel une donnée de position respective contient respectivement une indication concernant la position de déploiement de l'appareil (12, 32) respectif,
- déterminer (44) une donnée de position indiquant la position de séjour d'un utilisateur (10) ou d'un partenaire de communication de l'utilisateur (10),
- en fonction de la donnée de position déterminée de la position de séjour et des données de position enregistrées des appareils multiples (12, 32), sélectionner automatiquement (t30) au moins l'un des appareils multiples (12, 32) pouvant être utilisé par l'utilisateur (10),
- transmettre un message d'état (48) de l'unité de commande (TRM) à l'un des appareils multiples (12, 32) ou à un appareil de référence (32) utilisé par l'utilisateur (10), dans lequel le message d'état (48) permet de proposer à l'utilisateur (10) l'utilisation d'au moins un service fourni par un appareil composé des appareils multiples (12, 32),
- attribuer un identificateur d'appareil collectif à l'appareil composé,
- générer une demande de communication contenant l'identificateur d'appareil collectif sous la forme d'un identificateur d'un terminal appelant ou appelé parmi les appareils multiples (12, 32),
- dans lequel, au cours d'une communication établie suite à la demande de communication, au moins deux types différents de données utiles sont reçus, dans lequel, en fonction du type des données utiles, les données utiles sont automatiquement transmises à au moins deux des appareils multiples (12, 32) de l'appareil composé ou proviennent d'au moins deux appareils de l'appareil composé,
- dans lequel l'appareil composé est composé de telle sorte que dans le cadre d'une utilisation du service; un premier type de données utiles qui se présente est transmis de manière coordonnée à un premier (12) des appareils multiples, et un deuxième type de données utiles qui se présente est transmis à un deuxième (32) des appareils multiples.

2. Procédé selon la revendication 1, **caractérisé en ce que** la donnée de position générée désigne une pièce dans un bâtiment, ou **en ce qu'**une pièce dans un bâtiment est déterminée à partir de la donnée de position déterminée, et **en ce que** parmi les appareils multiples, au moins un appareil (22) est sélectionné dont la donnée de position désigne la pièce déterminée.

3. Procédé selon la revendication 1 ou 2, **caractérisé en ce que** la donnée de position déterminée contient deux ou trois indications de coordonnées,
**en ce qu'**au moins une donnée de périmètre est spécifiée qui fixe une distance, de préférence une distance inférieure à 10 mètres,
et **en ce qu'**en fonction de la donnée de périmètre, parmi les appareils multiples un appareil (22) est sélectionné dont la donnée de position désigne une position située dans le périmètre fixé par la donnée de périmètre autour de la position indiquée par les indications de coordonnées.

4. Procédé selon l'une quelconque des revendications précédentes, **caractérisé en ce qu'**au moins l'un des appareils multiples est une imprimante, un projecteur d'image (22), un écran (32), une unité d'acquisition d'image, un téléphone (12) ou un système informatique (32).

5. Procédé selon l'une quelconque des revendications précédentes, **caractérisé en ce que** l'utilisateur (10) se voit attribuer définitivement au moins l'un (32) des appareils multiples qui doit être inclus dans le message d'état (48) indépendamment de la donnée de position générée,
et **en ce que** parmi les appareils multiples, au moins un appareil attribué définitivement à l'utilisateur est inclus dans le message d'état (48) indépendamment de la donnée de position déterminée.

6. Procédé selon l'une quelconque des revendications précédentes, **caractérisé en ce qu'**un service concerne une communication multimédia à l'aide de l'appareil composé, **en ce que** l'appareil composé se voit attribuer sous la forme d'un identificateur d'appareil collectif, de préférence un identificateur d'appareil qui est également attribué à l'un des appareils multiples de l'appareil composé.

7. Procédé selon l'une quelconque des revendications précédentes, **caractérisé en ce que** pendant l'utilisation d'un service, au moins une donnée de position est mise à jour qui concerne la position de séjour de l'utilisateur (10) ou la position de déploiement d'un des appareils multiples dont le service est en cours d'exploitation,
et **en ce qu'**un message d'état modifié est généré en fonction de la donnée de position modifiée.

8. Procédé selon la revendication 6, **caractérisé en ce qu'**un appareil de l'appareil composé est un téléphone fixe (12) ou un téléphone mobile,
et **en ce qu'**un appareil de l'appareil composé est un appareil de reproduction d'image (22) ou un appareil d'acquisition d'image.

9. Unité de détermination de services utilisables, comprenant une unité de détermination de position qui reçoit ou détermine une donnée de position indiquant la position de séjour d'un utilisateur ou d'un partenaire de communication de l'utilisateur (10),
une unité de détermination d'appareil qui, en fonction de la donnée de position reçue ou déterminée et en fonction des données de position enregistrées pour plusieurs appareils (12, 32), sélectionne automatiquement au moins un appareil pouvant être utilisé par l'utilisateur,
et une unité de génération de message d'état (TRM) qui, en fonction des appareils sélectionnés, génère un message d'état (48) dans lequel est indiqué au moins un service pour un appareil composé de plusieurs appareils sélectionnés et qui est configuré de telle sorte que dans le cadre d'une utilisation du service, un premier type de données utiles qui se présente est transmis de manière coordonnée à un premier (12) des appareils multiples, et un deuxième type de données utiles attribuées qui se présente est transmis à un deuxième (32) des appareils multiples,
en ce qu'une unité de commande (TRM) est prévue pour effectuer la transmission,
une unité de répartition, qui en cas de message de demande de communication entrant, se présente vis-à-vis d'un appareil de partenaire de communication comme un appareil pour les services indiqués dans le message de demande de communication et répartit lesdits au moins deux flux de médias entrants sur au moins deux appareils différents parmi les appareils multiples,
et/ou une unité de concentration qui en cas de messages de demande de communication sortants regroupe des flux de médias d'au moins deux appareils individuels et qui se présente vis-à-vis d'un appareil de partenaire de communication comme un appareil doté de différents services.

10. Unité selon la revendication 9, **caractérisée en ce que** l'unité de détermination de position, l'unité de détermination d'appareil et l'unité de génération de message d'état sont disposées dans un appareil (TRM).
